# EUROPÄISCHE PATENTSCHRIFT

(11) **EP 1 245 395 B1**
(45) Veröffentlichungstag und Bekanntmachung des Hinweises auf die Patenterteilung: **02.05.2007**
(21) Anmeldenummer: 02100223.3
(22) Anmeldetag: 06.03.2002
(51) Int. Cl.: B41J 3/407, B41J 11/00

(54) **Verfahren und Vorrichtung zum Bedrucken von Kassetten oder Objektträgern für histologische Präparate**
Method and device for printing on cassettes or object supports for histological preparations
Procédé et dispositif pour imprimer sur des cassettes ou des supports d'objets pour des préparations histologiques

(30) Priorität: 27.03.2001 DE 10115065
(43) Veröffentlichungstag der Anmeldung: 02.10.2002
(73) Patentinhaber: Leica Microsystems Nussloch GmbH, 69226 Nussloch b. Heidelberg (DE)
(72) Erfinder: KIENE, Uwe, 69214 Eppelheim (DE); BIEHL, Manfred, 74909 Meckesheim (DE); LAUDAT, Andreas, 74909 Meckesheim (DE); METZNER, Holger, 69226 Nussloch (DE); METZNER, Rolf, 69221 Dossenheim (DE); WALTER, Roland, 68809 Neulussheim (DE)
(74) Vertreter: Reichert, Werner Franz

(56) Entgegenhaltungen:
- EP-A- 0 635 370
- EP-A- 0 978 388
- EP-A- 1 046 685
- GB-A- 2 180 195
- GB-A- 2 235 163
- US-A- 6 102 536

## Beschreibung

Die Erfindung betrifft ein Verfahren gemäß dem Oberbegriff des Patentanspruchs 1, und eine Vorrichtung gemäß dem Oberbegriff des Patentanspruchs 5.

Zur mikroskopischen Betrachtung von Präparaten, insbesondere von histologischen Präparaten, müssen diese zunächst einer chemischen Behandlung ausgesetzt werden, bei der das in der Probe enthaltene Wasser entzogen und beispielsweise durch Paraffin oder ein anderes Medium ersetzt wird. Zu dieser chemischen Behandlung werden die Proben in Kunststoffkassetten eingebracht. Eine derartige Kassette ist beispielsweise in der US 5 821 115 A dargestellt und beschrieben.

Rezepturen zur derartigen Probenbehandlung sind beispielsweise aus der Druckschrift "Einbettung- und Schneidverfahren für mikroskopische Präparate, Ernst Leitz GmbH, Liste 530-18a, September 1973" bekannt. Die beschriebenen Präparationsmethoden zeichnen sich dadurch aus, dass das Wasser durch Äthanol/Äthyläther/Isopropanol aus dem Präparat entfernt wird und anschließend die Präparate in Paraffin/Methaxcrylat eingebettet werden. Es versteht sich, dass die Kunststoffkassetten bzw. die verwendeten Materialien nicht mit dem chemischen Reagenzien reagieren dürfen.

Bei dieser Behandlung werden die Proben so weit stabilisiert, dass mittels eines Mikrotoms Dünnschnitte von den Proben hergestellt und diese dann auf jeweils einen gläsernen Objektträger aufgebracht werden können. Von jedem Präparat werden, je nach Untersuchungsmethode, mehrere Dünnschnitte hergestellt und auf die Objektträger aufgebracht. Vor der eigentlichen mikroskopischen Betrachtung müssen die auf den Objektträgern aufgebrachten Präparate noch eingefärbt werden. Dabei ist es üblich, dass nicht alle Präparate den gleichen Färbeprozess durchlaufen, sondern, je nach Untersuchungsmethode, werden drei oder mehr unterschiedlich gefärbte Präparate hergestellt.

Zur Unterscheidung und Kennzeichnung müssen die einzelnen Kassetten und Objektträger mit einer Beschriftung oder einem Code versehen werden. Bisher war es üblich die Kassetten und den Objektträger manuell mit Bleistift zu beschriften. Das Graphit war das einzigste Medium, welches gegen die Reagenzien des Einbettprozesses resistent war, jedoch mit dem Nachteil, dass es nicht wischfest aufgebracht werden kann. Bei der manuellen Kennzeichnung der Kassetten und/oder der Objektträger kann es jedoch zu Irrtümern kommen, die dann zu medizinischen Fehldiagnosen führen.

Aus diesem Grund sind computergestützte Beschriftungssysteme entwickelt worden, die diese manuellen Beschriftungsfehler weitgehend ausgeschlossen haben. Bei diesen Beschriftungssystemen besteht nun die Schwierigkeit ein geeignetes Druck- bzw. Schreibmedium zu finden. Dieses Medium muss sich dadurch auszeichnen, dass es gegen die unterschiedlichsten chemischen Lösungsmittel und Reagenzien resistent ist und sowohl auf den Kunststoffkassetten als auch auf dem Glas der Objektträger, bzw. dem lackierten Teil des Objektträgers, sicher hält. Hinzu kommt, dass auf den Kassetten und den Objektträgern nur sehr wenig Platz für eine entsprechende Codierung besteht, so dass der Code oder die Beschriftung entsprechend filigran aufgebracht werden muss.

Aus der GB 2 206 083 ist eine "Graviermaschine" für einen Objektträger und/oder eine Kassette bekannt. Diese Graviereinrichtung wird über einen Computer und ein Interface gesteuert und erlaubt es, entsprechende Markierungen in die Kassette bzw. in den Objektträger einzuritzen. Nachteilig ist jedoch, dass diese Maschine sehr laut und sehr langsam arbeitet und dabei noch sehr viel Schmutz durch das Gravieren produziert. Außerdem ist der eingravierte Code nur sehr schlecht lesbar.

Aus der GB 2 235 163 A ist ein Plotter für Kunststoffkassetten bekannt, bei dem die Beschriftung über ein Thermoverfahren mit einem beheizbaren Plotterstift und einem Karbonband erfolgt. Nachteilig ist hier, dass sich dieses Verfahren nur auf Kunststoff anwenden lässt und außerdem nur eine geringe Auflösung und Druckgeschwindigkeit realisierbar ist. Die geringe Druckgeschwindigkeit resultiert daraus, dass der Stift jeden Buchstaben einzeln nach Art eines Plotters anfahren muss.

Bei allen bekannten Drucksystemen ist die Auflösung relativ schlecht, so dass nur eine sehr "grobe" Beschriftung aufgebracht werden kann. Dadurch ist es nicht möglich, den aufgebrachten Code maschinenlesbar auszuführen. Das Aufbringen von sehr feinen Linien, wie es beispielsweise für Strichcode notwendig ist, kann mit keiner der bekannten Druckeinrichtungen realisiert werden.

Es ist daher Aufgabe der vorliegenden Erfindung ein Verfahren und eine Vorrichtung zum rechnergestützten Bedrucken von Kunststoff-Kassetten und/oder Glas-Objektträger zu entwickeln, bei dem neben einer hohen Druckauflösung auch eine hohe Druckgeschwindigkeit realisiert wird.

Diese Aufgabe wird erfindungsgemäß durch die im Kennzeichen des Patentanspruchs 1 (Verfahren) und des Patentanspruchs 5 (Vorrichtung) angegebenen Merkmale gelöst. Vorteilhafte Weiterbildungen der Erfindung sind Gegenstand der Unteransprüche.

Bei dem Verfahren zum Bedrucken von Kunststoff-Kassetten für histologische Präparate und/oder zum Bedrucken von Glas-Objektträgern für mikroskopische Dünnschnitte werden die Kassetten und/oder die Objektträger einer Druckeinrichtung zugeführt werden und dort ein Code und/oder eine Beschriftung mit einem rechnergesteuerten Tintenstrahldrucker aufgebracht. In einem weiteren Verfahrensschritt wird dann die aufgebrachte Tinte durch einen Warmluftstrom vorgetrocknet. Nach diesem Vortrocknen wird die aufgebrachte Tinte dem Licht einer Blitzlampe ausgesetzt und die Tinte vollständig durchgetrocknet. Durch das Licht der Blitzlampe werden die flüssigen Bestandteile der Tinte schlagartig erhitzt bzw. verdampft. Ohne eine Vortrocknung der Tinte durch den Warmluftstrom würden durch das schlagartige verdampfen Rußteilchen der Tinte mitgerissen und sich als Belag auf der Blitzlampe niederschlagen.

In einer weiteren Ausgestaltung der Erfindung wird die Kassette und/oder der Objektträger nach der Durchtrocknung der aufgebrachten Tinte an eine Ausgabe und/oder Stapeleinrichtung weitertransportiert und dort abgelegt.

Das Verfahren zeichnet sich auch dadurch aus, dass über eine Eingabeeinheit, beispielsweise ein Barcodelesegerät, ein Code eingelesen und/oder über eine Tastatur manuell eingegeben werden kann und dieser Code von der Rechnereinrichtung bearbeitet wird und anschließend entsprechende Drucksignale an den Druckkopf weitergeleitet werden. Die Rechnereinrichtung kann auch dazu benutzt werden, gespeicherte Druckprofile, z.B. das Bedrucken von mehreren Objektträgern mit unterschiedlichen Informationen, mit dem eingegebenen bzw. eingelesenen Code aufzurufen und entsprechende Drucksignale an die Druckeinrichtung weiterzuleiten.

Die Vorrichtung zur Durchführung des Verfahrens ist ein Rechner zum Steuern der Druckeinrichtung vorgesehen und die Druckeinrichtung weist einen Tintenstrahldrucker zum Bedrucken der Kassetten und/oder der Objektträger auf.

Als Tinte wird für die Druckeinrichtung eine lösungsmittelbasierende Tinte mit Rußpigmenten verwendet. Die Tinte zeichnet sich dadurch aus, dass sie durch schlagartige Wärmezufuhr mit IR und UV Strahlen aushärtbar ist.

Zur vollständigen Trocknung und Aushärtung werden die Kassetten und/oder die Objektträger zunächst einem Warmluftstrom ausgesetzt und anschließend in eine Blitzlichteinrichtung weitertransportiert. Über das Blitzlicht wird die vorgetrocknete Tinte schlagartig einer Wärmezufuhr mit IR und UV Strahlen ausgesetzt und dabei vollständig durchgetrocknet.

Die Erfindung zeichnet sich auch dadurch aus, dass eine Materialzuführeinrichtung für Kassetten unterschiedlicher Dimensionierung und/oder Objektträger unterschiedlicher Dimensionierung vorgesehen ist, so dass rechnergesteuert unterschiedliche Kassetten und/oder Objektträger bedruckt werden können.

Es hat sich dabei von Vorteil erwiesen, wenn die Kassetten und/oder die Objektträger in Stapelmagazinen zusammengefasst sind. Über die Rechnereinrichtung können dann die jeweiligen Magazine angesteuert werden. In einem einzigen Arbeitsschritt lassen sich so unterschiedliche Kassetten und/oder unterschiedliche Objektträger bedrucken.

In einer weiteren Ausgestaltung der Erfindung ist eine Transporteinrichtung zur rechnergesteuerten Entnahme aus den Stapelmagazinen und zur Zuführung der Kassetten und/oder der Objektträger zur Druckeinrichtung vorgesehen.

Die Druckeinrichtung ist ferner mit einer Entnahmeeinrichtung zum Ablegen der bedruckten Kassetten und/oder der bedruckten Objektträger ausgestattet. Diese Entnahmeeinrichtung schließt sich an die Blitzeinrichtung an.

Die Erfindung zeichnet sich auch dadurch aus, dass über den Rechner die verschiedenen Einrichtungen simultan ansteuerbar sind, so dass innerhalb der Druckeinrichtung verschiedene Prozesse gleichzeitig ausführbar sind. Damit wird ein ständiger Materialfluss realisiert und die Verarbeitungsgeschwindigkeit wesentlich erhöht.

Dem Rechnersystem ist zum Erfassen und zur Verwaltung der Probendaten eine Eingabeeinrichtung zugeordnet. Damit können die Daten zur Steuerung des gesamten Drucksystems über die eingegebenen Daten berechnet und die einzelnen Stationen innerhalb des Drucksystems simultan angesteuert werden.

In einer weiteren Ausgestaltung der Erfindung ist es vorgesehen, dass der Rechner über eine Schnittstelle an ein übergeordnetes Rechnersystem angeschlossen ist und über diese Schnittstelle Daten zwischen den beiden Rechnersystemen ausgetauscht werden. Dadurch wird es möglich, dass die zum Druck notwendigen Daten zentral gespeichert und von verschiedenen Drucksystemen abrufbar sind. Außerdem lässt sich so kontrollieren, ob die bedruckten Kassetten und/oder Objektträger bereits fertiggestellt sind.

Ferner ist es vorgesehen, dass die Kassetten und/oder die Objektträger manuell in die Druckeinrichtung eingelegt werden können.

Die Erfindung wird in einem Ausführungsbeispiel anhand der schematischen Zeichnungen dargestellt und näher erläutert. Es zeigen:
- Fig. 1:: Eine Ansicht der Druckeinrichtung,
- Fig. 2:: eine Seitenansicht der Druckeinrichtung.

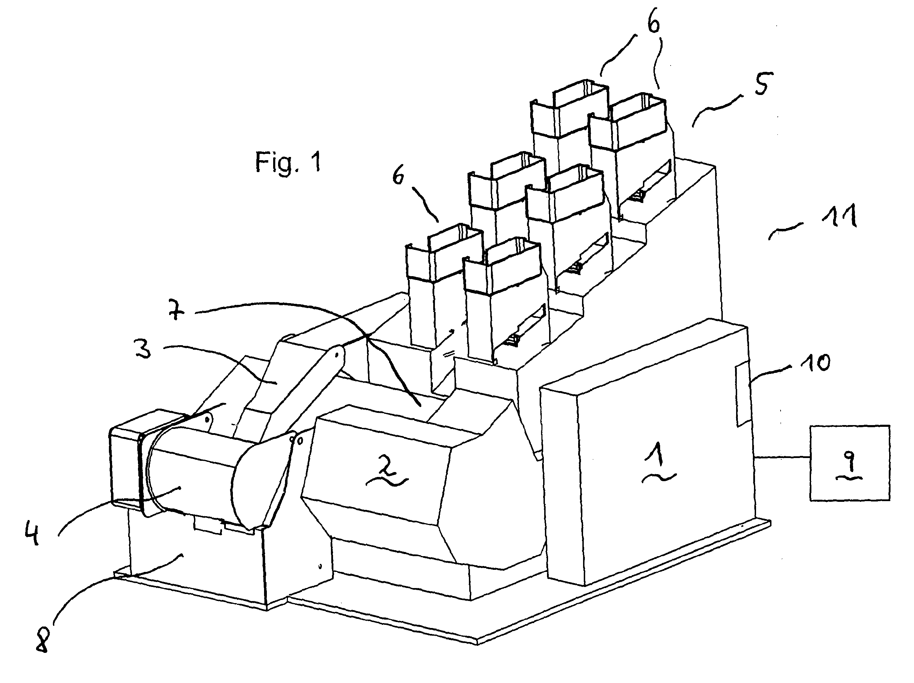

Die Figur 1 zeigt ein Drucksystem 11 mit einer Materialzuführung 5, die mehrere Stapelmagazine 6 für die zu bedruckenden Kassetten und/oder Objektträger aufweist. Der Materialzuführung 5 ist eine Transporteinrichtung 7 zugeordnet, die die Kassetten und/oder Objektträger zu einer Druckeinrichtung 2 transportiert. Die Druckeinrichtung 2 ist mit einem Tintenstrahldrucker ausgestattet. Die bedruckten Kassetten und/oder Objektträger werden mit der Transporteinrichtung 7 an eine Warmlufttrocknung 3 weitergeleitet. Mit dieser Warmlufttrocknung wird ein angewärmter Luftstrom erzeugt und auf die bedruckte Fläche der Kassette bzw. des Objektträgers gelenkt. Durch den Warmluftstrom wird die Tinte vorgetrocknet. Danach wird die Kassette und/oder der Objektträger an eine Blitzeinrichtung 4 weitergeleitet und die bedruckte Fläche dem Blitzlicht ausgesetzt. Dort wird über das Blitzlicht die vorgetrocknete Tinte schlagartig einer Wärmezufuhr mit IR und UV Strahlen ausgesetzt und dabei vollständig durchgetrocknet.

Die so behandelten Kassetten und/oder Objektträger werden dann mit der Transporteinrichtung 7 an eine Entnahmeeinrichtung 8 weitergeleitet.

Zur Steuerung des Drucksystems 11 ist eine Rechnereinrichtung 1 vorgesehen. Die Rechnereinrichtung 1 weist eine Schnittstelle 10 zum Anschluss an ein übergeordnetes Rechnersystem auf. Ferner ist die Rechnereinrichtung 1 mit einer Eingabeeinrichtung 9 verbunden. Diese kann sowohl einen Barcode-Lesegerät als auch eine Eingabetastatur aufweisen.

Über die Rechenreinrichtung 1 werden die einzelnen Einheiten simultan gesteuert, so dass gleichzeitig mehrere Kassetten und/oder Objektträger in dem Drucksystem 11 bearbeitet werden können und so ein kontinuierlicher Materialfluss gewährleistet ist.

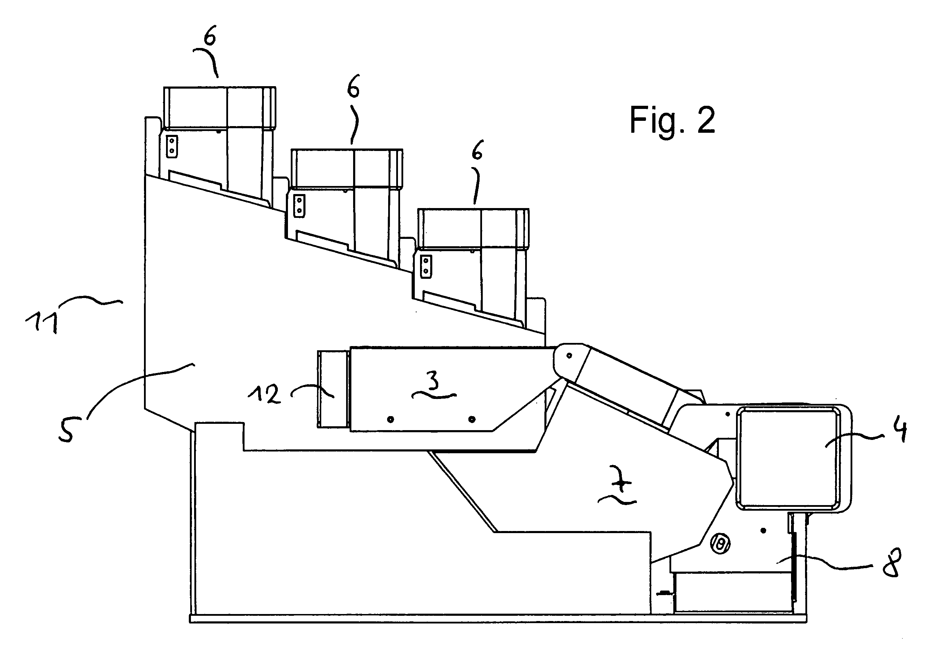

Die Figur 2 zeigt eine Seitenansicht des Drucksystems 11 mit der Materialzuführeinrichtung 5 und den Stapelmagazinen 6. Die Warmlufttrocknung 3 weist einen Lüfter mit Heizspirale 12 auf, über den der kontinuierliche Warmluftstrom erzeugt wird.

Mit dem Drucksystem lassen sich wahlweise sowohl Kassetten unterschiedlicher Dimensionierung wie auch Objektträger wechselweise bedrucken. Dadurch ist es auch möglich, in einem Arbeitsschritt sowohl die Kassetten als auch die Objektträger zu bedrucken. Es kann natürlich auch vorgesehen sein, das Drucksystem nur für das Bedrucken von Kassetten oder nur für das Bedrucken von Objektträgern auszustatten.

### Bezugszeichenliste

- 1 -: Rechnereinrichtung
- 2 -: Druckeinrichtung
- 3 -: Warmlufttrocknung
- 4 -: Blitzeinrichtung
- 5 -: Materialzuführeinrichtung
- 6 -: Stapelmagazin
- 7 -: Transporteinrichtung
- 8 -: Entnahmeeinrichtung
- 9 -: Eingabeeinrichtung
- 10-: Schnittstelle
- 11 -: Drucksystem
- 12 -: Lüfter mit Heizspirale

## Patentansprüche

1. Verfahren zum Bedrucken von Kunststoff-Kassetten für histologische Präparate und/oder zum Bedrucken von Glas-Objektträgern für mikroskopische Dünnschnitte, bei dem die Kassetten und/oder die Objektträger einer Druckeinrichtung zugeführt werden und dort ein Code und/oder eine Beschriftung aufgebracht wird, **dadurch gekennzeichnet, dass** der Code und/oder die Beschriftung von einem rechnergesteuerten Tintenstrahldrucker aufgebracht wird, wobei nach dem Aufbringen des Codes und/oder der Beschriftung die Kassette und/oder der Objektträger einem Warmluftstrom ausgesetzt wird und nach dem Vortrocknen der Tinte durch den Warmluftstrom, die aufgebrachte Tinte dem Licht einer Blitzlampe ausgesetzt und die Tinte durchgetrocknet wird.

2. Verfahren nach Anspruch 1, **dadurch gekennzeichnet, dass** die Kassette und /oder der Objektträger nach der Durchtrocknung der aufgebrachten Tinte an eine Ausgabe und/oder Stapeleinrichtung weiter transportiert wird.

3. Verfahren nach Anspruch 1, **dadurch gekennzeichnet, dass** der über eine Eingabeeinheit eingelesene und/oder eingegebene Code von der Rechnereinrichtung bearbeitet und als Drucksignale an den Druckkopf weitergeleitet werden.

4. Verfahren nach Anspruch 1, **dadurch gekennzeichnet, dass** über die Rechnereinrichtung mehrere Stationen innerhalb des Drucksystems simultan angesteuert werden und so ein kontinuierlicher Materialfluss gewährleistet ist.

5. Vorrichtung zum Bedrucken von Kunststoff-Kassetten für histologische Präparate und/oder von Glas-Objektträgern für mikroskopische Dünnschnitte, ausgebildet zur Durchführung des Verfahrens nach Anspruch 1, **dadurch gekennzeichnet, dass** ein Rechner (1) zum Steuern der Druckeinrichtung (2) vorgesehen ist und die Druckeinrichtung (2) einen Tintenstrahldrucker zum Bedrucken der Kassetten und/oder der Objektträger aufweist.

6. Vorrichtung nach Anspruch 5, **dadurch gekennzeichnet, dass** als Tinte eine lösungsmittelbasierende Tinte mit Rußpigmenten verwendet wird und die Tinte durch schlagartige Wärmezufuhr mit IR und UV Strahlen aushärtbar ist, wobei zur Aushärtung eine Warmlufttrocknung (3) und eine Blitzeinrichtung (4) vorgesehen ist.

7. Vorrichtung nach Anspruch 5, **dadurch gekennzeichnet, dass** die Vorrichtung eine Materialzuführeinrichtung (5) für Kassetten unterschiedlicher Dimensionierung und/oder Objektträgern unterschiedlicher Dimensionierung aufweist und die Kassetten und/oder die Objektträger in Stapelmagazinen (6) zusammengefasst sind.

8. Vorrichtung nach Anspruch 7, **dadurch gekennzeichnet, dass** eine Transporteinrichtung (7) zur rechnergesteuerten Entnahme aus den Stapelmagazinen (6) und zur Zuführung der Kassetten und/oder der Objektträger zur Druckeinrichtung (2) vorgesehen ist.

9. Vorrichtung nach Anspruch 5, **dadurch gekennzeichnet, dass** der Blitzeinrichtung (4) eine Entnahmeeinrichtung (8) zum Ablegen der bedruckten Kassetten und/oder der bedruckten Objektträger nachgeordnet ist.

10. Vorrichtung nach Anspruch 5, **dadurch gekennzeichnet, dass** der Rechner (1) über eine Schnittstelle (10) an ein übergeordnetes Rechnersystem angeschlossen ist und über diese Schnittstelle (10) Daten zwischen den beiden Rechnersystemen ausgetauscht werden.

## Claims

1. Method for printing onto plastic cassettes for histological preparations and/or for printing onto glass specimen slides for microscopic thin sections, in which the cassettes and/or specimen slides are conveyed to a printing device where a code and/or a label is applied, **characterized in that** the code and/or the label is applied by a computer-controlled inkjet printer, wherein after application of the code and/or the label, the cassette and/or specimen slide is exposed to a flow of hot air and after pre-drying of the ink by means of the flow of hot air, the applied ink is exposed to the light of a flash lamp and the ink is completely dried.

2. Method according to Claim 1, **characterized in that** after complete drying of the applied ink the cassette and/or specimen slide is transported to an output and/or stacking device.

3. Method according to Claim 1, **characterized in that** the code, read in and/or inputted by way of an input unit, is processed by the computing device and forwarded as printing signals to the print head.

4. Method according to Claim 1, **characterized in that** by way of the computing device, multiple stations within the printing system are activated simultaneously, thus ensuring a continuous material flow.

5. Apparatus for printing onto plastic cassettes for histological preparations and/or onto glass specimen slides for microscopic thin sections, designed for carrying out the method according to Claim 1,
**characterized in that** a computer (1) is provided to control the printing device (2), and the printing device (2) comprises an inkjet printer for printing onto the cassettes and/or specimen slides.

6. Apparatus according to Claim 7, **characterized in that** a solvent-based ink having carbon black pigments is used as the ink and the ink can be cured by abrupt thermal input with IR and UV radiation, wherein a hot-air drier (3) and a flash device (4) are provided for curing.

7. Apparatus according to Claim 5, **characterized in that** the apparatus comprises a material delivery device (5) for cassettes of various dimensions and/or specimen slides of various dimensions and the cassettes and/or specimen slides are grouped into stack magazines (6).

8. Apparatus according to Claim 7, **characterized in that** a transport device (7) is provided for computer-controlled removal from the stack magazines (6) and for delivery of the cassettes and/or specimen slides to the printing device (2).

9. Apparatus according to Claim 5, **characterized in that** a removal device (8) for deposition of the imprinted cassettes and/or imprinted specimen slides is arranged after the flash device (4).

10. Apparatus according to Claim 5, **characterized in that** the computer (1) is connected via an interface (10) to a higher-level computing system, and data are exchanged between the two computing systems by way of said interface (10).

## Revendications

1. Procédé d'impression de cartouches en matière plastique pour des préparations histologiques et/ou d'impression de supports d'objets en verre pour des coupes minces microscopiques, dans lequel les cartouches et/ou les supports d'objets sont acheminés vers un dispositif d'impression dans lequel est appliqué un code et/ou une inscription, **caractérisé en ce que** le code et/ou l'inscription est appliqué(e) par une imprimante à jet d'encre commandée par ordinateur, après l'application du code et/ou de l'inscription, la cartouche et/ou le support d'objet étant exposé(e) à un courant d'air chaud et après le préséchage de l'encre par le courant d'air chaud, l'encre appliquée étant exposée à la lumière d'une lampe flash et l'encre étant séchée à coeur.

2. Procédé selon la revendication 1, **caractérisé en ce que**, après le séchage à coeur de l'encre appliquée, la cartouche et/ou le support d'objet est transporté(e) ultérieurement vers une sortie ou vers un dispositif d'empilage.

3. Procédé selon la revendication 1, **caractérisé en ce que** le code lu et/ou saisi par l'intermédiaire de l'unité de saisie est traité par le dispositif informatique et retransmis vers la tête d'impression sous la forme de signaux d'impression.

4. Procédé selon la revendication 1, **caractérisé en ce que** plusieurs postes sont activés simultanément au sein du système d'impression par l'intermédiaire du dispositif informatique, pour garantir de cette façon un flux continu de matière.

5. Dispositif d'impression de cartouches en matière plastique pour des préparations histologiques et/ou pour des supports d'objets en verre pour des coupes minces histologiques, conçu pour la réalisation du procédé selon la revendication 1, **caractérisé en ce qu'**un ordinateur (1) est prévu pour commander le dispositif d'impression (2) et **en ce que** le dispositif d'impression (2) comporte une imprimante à jet d'encre pour l'impression des cartouches et/ou des supports d'objets.

6. Dispositif selon la revendication 5, **caractérisé en ce qu'**on utilise comme encre une encre sur base de solvants avec des pigments de noir de carbone et **en ce que** l'encre est susceptible de durcir par brusque apport de chaleur par des rayons IR ou UV, un séchage à l'air chaud (3) et un dispositif de flash (4) étant prévus pour le durcissement.

7. Dispositif selon la revendication 5, **caractérisé en ce que** le dispositif comporte un système d'alimentation de matière (5) pour des cartouches de différentes dimensions et/ou des supports d'objets de différentes dimensions et **en ce que** les cartouches et/ou les supports d'objets sont regroupés dans des magasins d'empilage (6).

8. Dispositif selon la revendication 7, **caractérisé en ce qu'**un dispositif de transport (7) est prévu pour le prélèvement commandé par ordinateur dans les magasins d'empilage (6) et pour l'acheminement des cartouches et/ou des supports d'objets vers le dispositif d'impression (2).

9. Dispositif selon la revendication 5, **caractérisé en ce qu'**un dispositif de prélèvement (8) pour déposer les cartouches imprimées et/ou les supports d'objets imprimés est monté en aval du dispositif flash (4).

10. Dispositif selon la revendication 5, **caractérisé en ce que** l'ordinateur (1) est branché par l'intermédiaire d'une interface (10) sur un système informatique directeur et **en ce que** des données sont échangées entre les deux systèmes informatiques, par l'intermédiaire de cette interface (10).
